(19) Europäisches Patentamt
European Patent Office
Office européen des brevets

(11) Numéro de publication : **0 027 757**
**B1**

(12) **FASCICULE DE BREVET EUROPÉEN**

(45) Date de publication du fascicule du brevet :
02.05.84

(21) Numéro de dépôt : **80401420.7**

(22) Date de dépôt : **06.10.80**

(51) Int. Cl.³ : **H 02 H 3/48**

(54) **Dispositif de protection pour ligne d'énergie électrique.**

(30) Priorité : **17.10.79 FR 7925784**

(43) Date de publication de la demande :
**29.04.81 Bulletin 81/17**

(45) Mention de la délivrance du brevet :
**02.05.84 Bulletin 84/18**

(84) Etats contractants désignés :
**CH DE GB IT LI SE**

(56) Documents cités :
**US-A- 2 405 083**
**US-A- 2 561 848**
**ELEKTRIE, vol. 21, no. 11, novembre 1967, BERLIN (DD) ROTHE: "Ein Relais zur Unterscheidung von Leitungsabschaltungen bei Schwingungen", pages U195**

(73) Titulaire : **ENERTEC SOCIETE ANONYME**
**12, Place des Etats-Unis**
**F-92120 Montrouge (FR)**

(72) Inventeur : **Souillard, Michel**
**16, rue des Fauvettes**
**F-92260 Fontenay Aux Roses (FR)**

(74) Mandataire : **Bentz, Jean-Paul**
**GIERS SCHLUMBERGER Service BREVETS 12, place des Etats-Unis**
**F-92124 Montrouge Cedex (FR)**

# 0 027 757

## Dispositif de protection pour ligne d'énergie électrique

La présente invention concerne un dispositif de protection à utiliser en association avec une ligne de transport d'énergie électrique à courant alternatif et plus précisément concerne un dispositif de ce type à utiliser lorsque la ligne est branchée entre au moins deux générateurs dont le fonctionnement est normalement synchronisé afin de fournir une protection en cas de rupture du synchronisme entre les générateurs.

Un des problèmes posés par la protection de lignes de transport de courant alternatif contre divers défauts est de distinguer rapidement et de façon sûre les effets initiaux d'un défaut des effets assez semblables qui peuvent se produire lors d'oscillations de puissance.

Il a déjà été proposé, comme dans l'article intitulé « Relais statiques ultra-rapides pour mesures de distance » présenté par L. MOUTON et M. SOUILLARD au CIGRE (Conférence Internationale des Grands Réseaux Electriques à haute tension) lors de la session qui s'est tenue du 10 au 20 juin 1968, d'utiliser deux relais statiques (ou à semi-conducteurs) de mesure du type « résistance-inductance » (également connus sous le nom de relais d'impédance) pour détecter les oscillations de puissance afin d'inhiber les fonctionnements parasites du dispositif protecteur, dont les deux relais font partie en réponse aux oscillations de puissance. Comme il est décrit à propos de la Figure 4.3 dans le chapitre 4 de cet article chacun des deux relais présente une caractéristique d'impédance définissant deux droites parallèles dans leurs diagrammes RX les deux droites $D_1$ et $D_2$ de l'un des relais étant situées entre les deux droites $D'_1$ et $D'_2$ de l'autre relais.

Cependant, lorsqu'on utilise cet agencement de relais déjà proposé en association avec une ligne de transport d'énergie électrique branchée entre des générateurs normalement synchronisés celui-ci n'est pas capable de distinguer rapidement et de façon sûre les oscillations de puissance de la perte de synchronisme entre les générateurs. Cela peut être gênant, car, bien que l'on puisse se dispenser de toute intervention pour les oscillations de puissance (ou qu'une intervention ne soit nécessaire que si elles persistent), la perte de synchronisme est potentiellement plus grave et peut exiger une intervention plus rapide.

On connaît également, par le brevet américain US 2 405 0 83 un dispositif à deux détecteurs d'impédance d'après le préambule de la revendication, conçu en vue de distinguer les oscillations de puissance et les pertes de synchronisme. A cette fin, ce dispositif connu comporte un circuit de sortie élaborant un signal en fonction d'une séquence d'états différents des signaux de sortie des détecteurs d'impédance. Cependant, dans ce dispositif antérieur, les domaines d'impédance surveillés par les détecteurs sont des demi-espaces et les séquences possibles d'états différents des signaux de sortie des détecteurs sont en nombre restreint. Or, il apparaît que différents phénomènes sans gravité, tel que la manœuvre d'un disjoncteur dont résulte une inversion du sens de la puissance électrique sur une ligne, ou tel que l'élimination d'un défaut extérieur à la ligne, soient susceptibles de produire les mêmes séquences d'états différents que produit une perte de synchronisme, de sorte que ce dispositif connu réagira à ces phénomènes parasites sans gravité comme il réagit aux pertes de synchronisme.

L'invention a donc pour but de fournir un dispositif protecteur à utiliser en association avec une ligne de transport d'énergie électrique branchée entre des générateurs normalement synchronisés présentant une sélectivité et une fiabilité supérieures à celles des dispositifs connus et notamment insensibles aux phénomènes parasites sans gravité.

Conformément à la présente invention, ce but est réalisé par les caractéristiques caractérisantes de la revendication.

Le circuit est sensible à chaque séquence possible de signaux indicateurs de zone signalant une rupture de synchronisme entre les générateurs, de sorte que ledit signal de sortie soit indicateur d'une rupture de synchronisme, et il est également sensible à chaque séquence possible de signaux indicateurs de zone signalant d'importantes oscillations de puissance de façon à produire un autre signal de sortie, de telle sorte que ledit autre signal de sortie soit indicateur de la présence desdites importantes oscillations de puissance.

On décrira à présent l'invention uniquement à titre d'exemple, en se référant aux dessins en annexe dans lesquels :

la Figure 1 est un circuit-diagramme sous forme de blocs représentant l'appareil protecteur de l'invention ;

la Figure 2 est un diagramme RX illustrant les caractéristiques d'impédance de l'appareil de la Figure 1 ; et

la Figure 3 est un diagramme sous forme de blocs représentant un circuit logique séquentiel simplifié faisant partie de l'appareil de la Figure 1.

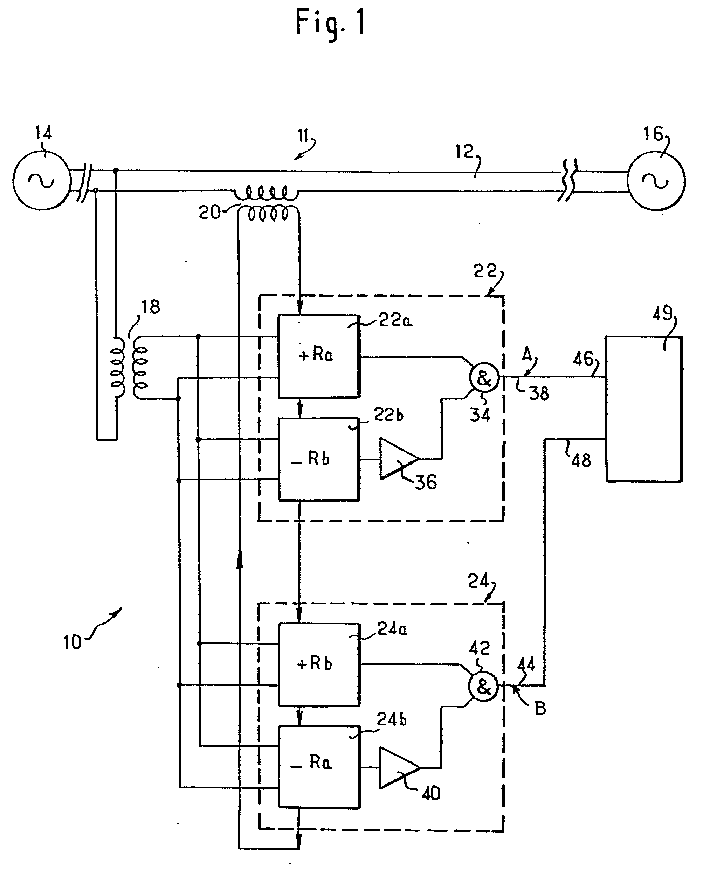

Le dispositif protecteur illustré dans la Figure 1 est indiqué d'une manière générale en 10 et est représenté connecté à un point de mesure approprié 11 sur une ligne à haute tension 12 qui relie deux générateurs 14 et 16 normalement synchronisés. Le branchement du dispositif 10 à la ligne 12 s'effectue par l'intermédiaire d'un transformateur de tension 18 qui fournit au dispositif 10 un premier signal d'entrée représentatif de la tension de la ligne 12 au point de mesure 11.

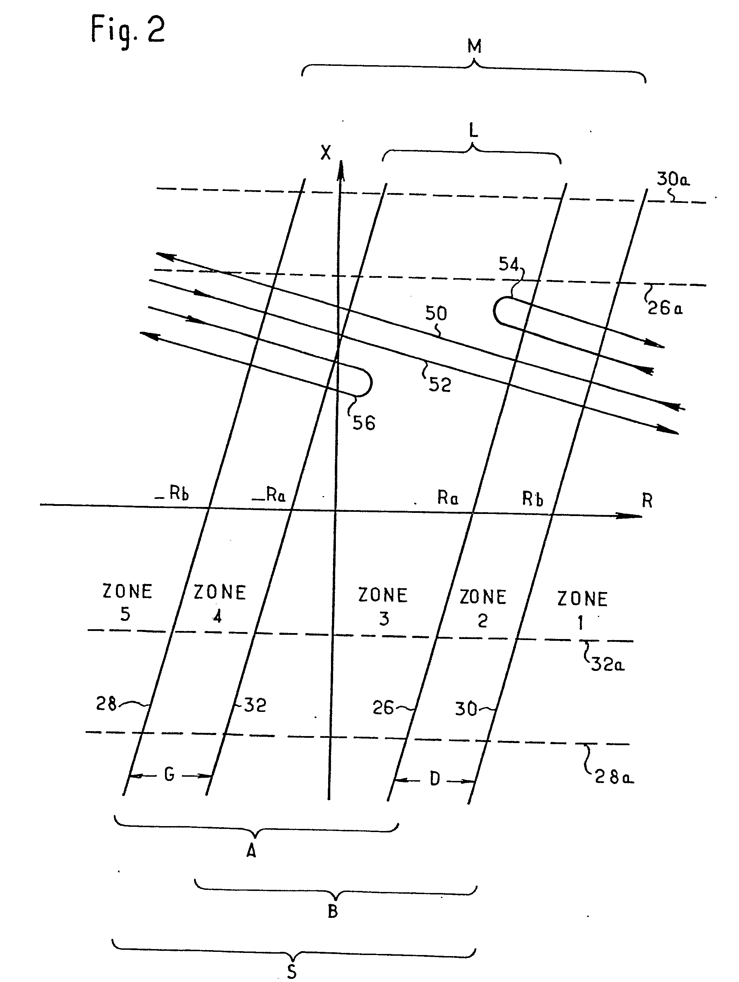

Le dispositif 10 comporte deux relais d'impédance classiques 22 et 24 du type à bande, chacun de

2

ces relais étant agencé de manière à utiliser les signaux d'entrée représentatifs de la tension et du courant fournis par les transformateurs 18 et 20 pour détecter si l'impédance apparente de la ligne 12 vue au point de mesure 11 se situe ou non à l'intérieur d'une bande prédéterminée de valeurs définies entre deux droites parallèles du diagramme RX du relais. Pour des raisons qui apparaîtront ci-après, les relais 22 et 24 présentent des bandes parallèles qui se chevauchent comme le montre la Figure 2, la bande du relais 22 étant définie entre les droites 26 et 28 (coupant l'axe R en $+ R_a$ et $- R_b$ respectivement, avec $R_b > R_a$) et la bande du relais 24 étant définie entre les droites 30 et 32 (coupant l'axe R en $+ R_b$ et $- R_a$ respectivement). Comme il apparaîtra également ci-après les bandes chevauchantes définissent cinq zones distinctes indiquées en 1 à 5 dans la Figure 2, parmi lesquelles les zones 1 à 4 (ou 2 à 5) sont faciles à distinguer les unes des autres.

Chacun des relais 22 et 24 est lui-même constitué de deux relais d'impédance 22a, 22b et 24a, 24b du type à caractéristique linéaire, chacun d'eux étant agencé pour définir respectivement l'une des lignes 26, 28, 30 et 32.

Les relais 22a, 22b, 24a et 24b peuvent tous être du type décrit dans le brevet du Royaume Uni N° 1 140 023 et illustré par les Figures choisies conformément aux directives données dans ce mémoire, de manière à disposer les droites caractéristiques 26, 28, 30 et 32 comme mentionné ci-dessus et comme représenté dans la Figure 2 du présent mémoire. Chacun des relais 22a, 22b, 24a et 24b produit un signal logique respectif à deux niveaux indiquant si l'impédance détectée par le relais se trouve à droite ou à gauche de sa droite caractéristique respective. En supposant qu'un signal au niveau logique 1 indique que l'impédance détectée se situe à gauche de la droite caractéristique, si la sortie du relais 22a est appliquée à l'une des entrées d'une porte ET 34 à deux entrées et si la sortie du relais 22b est reliée à l'autre entrée de la porte ET 34 par l'intermédiaire d'un inverseur 36, la porte ET produira à sa sortie 38 un signal A au niveau logique 1 lorsque l'impédance apparente de la ligne 12 vue au point 11 se trouvera dans la bande comprise entre les droites 26 et 28. Les signaux logiques produits par les relais 24a 24b sont combinés de la même façon par un inverseur 40 et une porte ET 42 qui produit donc à sa sortie 44 un signal B au niveau logique 1 lorsque l'impédance apparente de la ligne 12 vue au point 11 se trouve dans la bande comprise entre les droites 30 et 32.

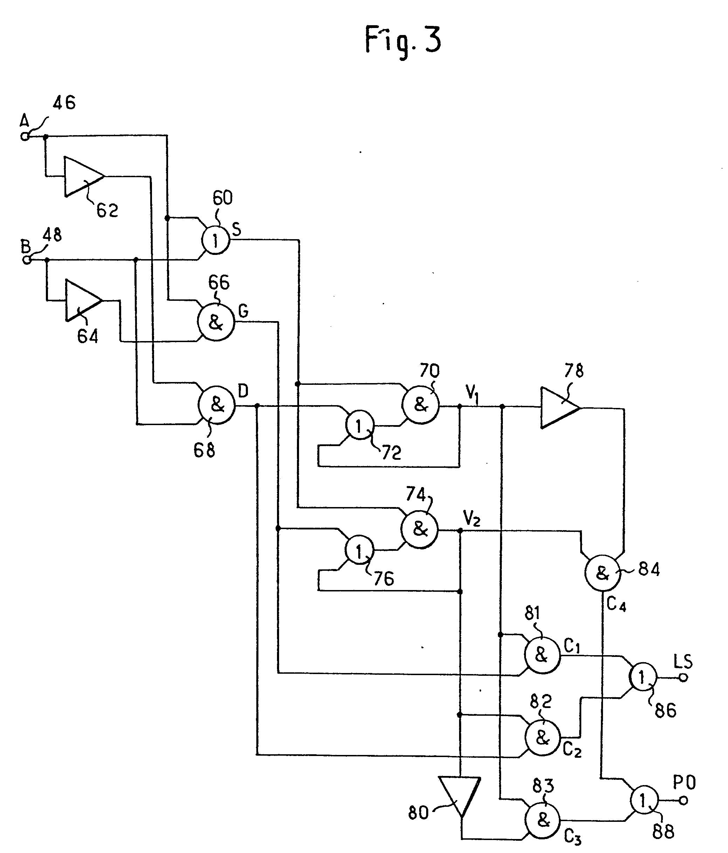

Les sorties respectives 48 et 44 des portes ET 34 et 42 constituent également les sorties des relais d'impédance du type à bande 22 et 24 respectivement, et sont reliées aux entrées respectives 46 et 48 d'un circuit logique séquentiel 49 dont la structure et le fonctionnement seront décrits en détail en se référant à la Figure 3.

Les générateurs 14 et 16 fournissent normalement des tensions alternatives pratiquement égales et bien qu'il puisse y avoir un important déphasage entre ces tensions les générateurs fonctionnent en synchronisme sous le contrôle des régulateurs de tension, vitesse et puissance des Groupes Générateurs. En l'absence de défauts, l'impédance apparente de la ligne de transfert d'énergie électrique 12 vue au point de mesure 11, se trouvera normalement soit à droite de la droite située à l'extrême droite (c'est-à-dire la ligne 30), dans la zone 1 du diagramme RX de la Figure 2, soit à gauche de la droite située à l'extrême (c'est-à-dire la droite 28) dans la zone 5 du diagramme, les positions relatives des droites étant ajustées de manière à ce que ces conditions soient remplies.

On peut montrer qu'au cas où le synchronisme entre les générateurs 14 et 16 est rompu, le point représentant l'impédance apparente de la ligne de transport d'énergie électrique 12 se déplacera en partant de sa position initiale d'un côté du diagramme RX pour atteindre l'autre côté, en suivant un parcours tel que celui indiqué en 50 ou 52 : les parcours 50 et 52 sont des droites si les tensions respectives fournies par les générateurs 14 et 16 sont égales et des arcs de cercles de rayons relativement grands dans le cas contraire.

Par ailleurs, dans le cas des oscillations de puissance on peut montrer que le point représentant l'impédance apparente de la ligne de transport d'énergie électrique 12 se déplacera tout d'abord en partant de sa position initiale mentionnée ci-dessus pour atteindre le centre du diagramme RX, c'est-à-dire la zone située entre les droites 26 et 32 où les bandes respectives des relais 22 et 24 se chevauchent, puis reviendra vers sa position initiale le changement de sens se produisant à l'instant où les oscillations de puissance atteignent leur amplitude maximale : deux exemples types des chemins parcourus par le point représentant l'impédance apparente de la ligne de transport d'énergie électrique 12 pendant des oscillations de puissance sont indiqués en 54 et 56.

On notera que pour l'agencement de relais proposé antérieurement et mentionné dans l'introduction du présent mémoire, les droites $D_1$ et $D_2$ peuvent être considérées équivalentes aux droites 26 et 32 respectivement de la Figure 2 alors que les droites $D'_1$ et $D'_2$ peuvent être considérées équivalentes aux droites 30 et 28 respectivement de la Figure 2 : l'agencement de relais proposé antérieurement définit donc deux bandes coaxiales (c'est-à-dire que l'une des bandes est entièrement contenue dans l'autre) et non deux bandes qui se chevauchent comme celles définies par les relais 22 et 24 de l'appareil 10. En supposant que l'agencement de relais proposé antérieurement produise un signal logique L lorsque l'impédance détectée se trouve dans la bande extérieure, comme représenté dans la Figure 2, une impédance détectée variant suivant les parcours respectifs 50, 52, 54 et 56 produirait les séquences de signaux logiques combinés représentées dans le Tableau I ci-dessous :

(Voir Tableau I page 4)

3

**Tableau I**

| Parcours | Séquence des zones | | | | |
|---|---|---|---|---|---|
| | Séquence des signaux logiques | | | | |
| 50 | 1 $\overline{L}.\overline{M}$ | 2 $\overline{L}.M$ | 3 $L.M$ | 4 $\overline{L}.M$ | 5 $\overline{L}.\overline{M}$ |
| 52 | 5 $\overline{L}.\overline{M}$ | 4 $\overline{L}.M$ | 3 $L.M$ | 2 $\overline{L}.M$ | 1 $\overline{L}.\overline{M}$ |
| 54 | 1 $\overline{L}.\overline{M}$ | 2 $\overline{L}.M$ | 3 $L.M$ | 2 $\overline{L}.M$ | 1 $\overline{L}.\overline{M}$ |
| 56 | 5 $\overline{L}.\overline{M}$ | 4 $\overline{L}.M$ | 3 $L.M$ | 4 $\overline{L}.M$ | 5 $\overline{L}.\overline{M}$ |

Il apparaît clairement dans le tableau I que la variation d'impédance représentée par les parcours 50 et 52, résultant d'une rupture de synchronisme entre les générateurs 14 et 16 ne peut pas être distinguée de la variation d'impédance représentée par les parcours 54 et 56, due à des oscillations de puissance.

Cependant, avec les relais 22 et 24, une impédance détectée variant suivant les parcours respectifs 50, 52, 54 et 56 produit les séquences de signaux logiques combinés représentées dans le Tableau II ci-dessous.

**Tableau II**

| Parcours | Séquence de zones | | | | |
|---|---|---|---|---|---|
| | Séquence de signaux logiques | | | | |
| 50 | 1 $\overline{A}.\overline{B}$ | 2 $\overline{A}.B$ | 3 $A.B$ | 4 $A.\overline{B}$ | 5 $\overline{A}.\overline{B}$ |
| 52 | 5 $\overline{A}.\overline{B}$ | 4 $A.\overline{B}$ | 3 $A.B$ | 2 $\overline{A}.B$ | 1 $\overline{A}.\overline{B}$ |
| 54 | 1 $\overline{A}.\overline{B}$ | 2 $\overline{A}.B$ | 3 $A.B$ | 2 $\overline{A}.B$ | 1 $\overline{A}.\overline{B}$ |
| 56 | 5 $\overline{A}.\overline{B}$ | 4 $A.\overline{B}$ | 3 $A.B$ | 4 $A.\overline{B}$ | 5 $\overline{A}.\overline{B}$ |

Il ressort clairement du Tableau II que la variation d'impédance représentée par les parcours 50 et 52 et résultant d'une rupture de synchronisme entre les générateurs 14 et 16 peut être distinguée de la variation d'impédance représentée par les parcours 54 et 56 et résultant des oscillations de puissance. Cela résulte essentiellement du fait qu'avec l'agencement de relais proposé antérieurement, les zones 2 et 4 sont toutes deux indiquées par la même combinaison de signaux logiques tandis qu'avec les relais 22 et 24 les zones 2 et 4 sont indiquées par des combinaisons de signaux logiques différentes.

Le circuit logique séquentiel 49 a pour rôle de distinguer les unes des autres les différentes séquences de signaux logiques indiquant les variations d'impédance suivant les parcours 50 et 52 d'une part, et les variations d'impédance suivant les parcours 54 et 56 d'autre part. A cet effet, le circuit 49 comprend une porte OU 60 agencée pour recevoir les signaux logiques A et B appliqués aux entrées 46 et 48 et pour produire à partir de ceux-ci un signal logique $S = A + B$, indiquant que l'impédance détectée se trouve dans l'une des zones 2, 3 et 4 du diagramme RX de la Figure 2. Le circuit 49 comporte également des inverseurs 62 et 64 reliés respectivement aux bornes 46 et 48 permettant de produire respectivement des signaux logiques $\overline{A}$ et $\overline{B}$. Une porte ET 66 est branchée pour recevoir les signaux logiques A et $\overline{B}$ de façon à produire un signal logique $G = A . \overline{B}$, indiquant que l'impédance détectée se trouve dans la zone 4 et une porte ET 68 est branchée pour recevoir les signaux logiques $\overline{A}$ et B de façon à produire un signal logique $D = \overline{A} . B$, indiquant que l'impédance détectée se trouve dans la zone 2.

Une porte ET 70 est branchée pour recevoir le signal logique S et le signal de sortie produit par une porte OU 72 branchée pour recevoir le signal logique D et le signal de sortie de la porte ET 70 : la porte ET 70 produit ainsi un signal logique $V_1 = S . (D + V_1)$ qui sert à enregister le fait que l'impédance détectée a pénétré dans le domaine constitué par les zones 2, 3 et 4 en passant par la zone 2, c'est-à-dire en venant de la zone 1.

De même, une porte ET 74 est branchée pour recevoir le signal logique S et le signal de sortie produit par une porte OU 76 branchée pour recevoir le signal logique G et le signal de sortie de la porte ET 74 : la porte ET 74 produit ainsi un signal logique $V_2 = S . (G + V_2)$ qui sert à enregistrer le fait que l'impédance détectée a pénétré dans le domaine constitué par les zones 2, 3 et 4 en passant par la zone 4, c'est-à-dire en venant de la zone 5.

Enfin, le circuit 49 comprend deux autres inverseurs 78 et 80 agencés pour produire des signaux logiques $\bar{V}_1$ et $\bar{V}_2$ respectivement, quatre portes ET 81 à 84 et deux portes OU 86 et 88.

La porte ET 81 reçoit les signaux logiques $V_1$ et G pour produire un signal logique de sortie $C_1 = V_1 . G$ qui indique que l'impédance détectée qui a pénétré dans le domaine constitué par les zones 2, 3 et 4 en passant par la zone 2, s'est dirigée vers la zone 4, c'est-à-dire en suivant un parcours semblable au parcours 50.

La porte ET 82 reçoit les signaux logiques $V_2$ et D pour produire un signal logique de sortie $C_2 = V_2 . D$ qui indique que l'impédance détectée qui a pénétré dans le domaine constitué par les zones 2, 3 et 4 en passant par la zone 4, s'est dirigée vers la zone 2, c'est-à-dire en suivant un parcours semblable au parcours 52.

On notera que chacun des signaux $C_1$ et $C_2$ est indicateur du début de rupture de synchronisme entre les générateurs 14 et 16. Par conséquent, les signaux $C_1$ et $C_2$ sont appliqués à la porte OU 86 dont le signal de sortie logique LS peut être utilisé pour actionner un dispositif d'alarme et/ou agir par l'intermédiaire du système de contrôle mentionné ci-dessus pour tenter de rétablir le synchronisme et/ou pour actionner un commutateur de sécurité afin d'isoler le générateur défectueux.

La porte ET 83 reçoit les signaux logiques $V_1$ et $\bar{V}_2$ pour produire un signal logique de sortie $C_3 = V_1 . V_2$, alors que la porte ET 84 reçoit les signaux logiques $V_1$ et $\bar{V}_2$ pour produire un signal logique de sortie $C_4 = \bar{V}_1 . V_2$. Les signaux $C_3$ et $C_4$ indiquent tous deux la présence d'oscillations de puissance et sont appliqués à la porte OU 88 pour produire un signal de sortie logique PO qui peut être utilisé dans le but d'actionner un dispositif d'alarme.

On notera que le circuit logique 49 a été simplifié afin de ne montrer que les composants les plus importants intervenant pour distinguer les oscillations de puissance des ruptures de synchronisme. En particulier, les circuits de temporisation bien connus des spécialistes, ont été omis pour plus de clarté, ainsi que les circuits connus servant à actionner le commutateur de sécurité si l'impédance détectée se déplace presque instantanément dans la bande de défaut définie par les droites parallèles intérieures 26 et 32 (A . B).

En variante et de préférence, les relais 22 et 24 peuvent chacun être remplacés par des relais ayant une caractéristique quadrilatérale définie par un parallélogramme dans son diagramme RX comme décrit en référence à la Figure 4.4 dans l'article mentionné ci-dessus de Mouton et Souillard ou comme illustré dans la Figure 4 du brevet du Royaume Uni mentionné ci-dessus. Le parallélogramme de l'un des relais est défini par les droites 26 et 28 ainsi que les lignes en pointillés 26a et 28a de la figure 2, alors que celui de l'autre relais est défini par les droites 30, 32 et 30a, 32a : on peut remarquer que la bande définie par les droites 26a et 28a chevauche la bande définie par les droites 30a et 32a d'une façon tout à fait analogue au chevauchement des bandes définies par les droites 26, 28 et 30, 32. Dans ce cas, le circuit logique séquentiel 49 peut simplement être doublé ou sinon modifié de façon à produire les signaux de sortie souhaités.

**Revendication**

Dispositif de protection destiné à être installé à une extrémité d'une ligne (12) de transport d'énergie électrique à courant alternatif branchée entre des générateurs (14, 16) normalement synchronisés, et à délivrer au moins un signal de sortie dont l'état diffère selon qu'apparaissent des ruptures de synchronisme entre les générateurs ou des oscillations de puissance, ce dispositif comprenant au moins des premier (22) et second (24) détecteurs d'impédance délivrant des premier (A) et second (B) signaux indicateurs respectifs, l'état du premier signal indicateur (A) étant différent selon que l'impédance apparente de la ligne se trouve à l'intérieur ou à l'extérieur d'un premier domaine d'impédance, l'état du second signal indicateur étant différent selon que l'impédance apparente de la ligne se trouve à l'intérieur ou à l'extérieur d'un second domaine d'impédance, et les premier et second domaines ayant en commun une zone de recouvrement (zone 3), qui est différente de chacun des deux domaines, qui a, suivant la direction d'une droite, la forme d'une bande, et qui est traversée par l'impédance de ligne en cas de rupture de synchronisme, ce dispositif comprenant en outre un circuit de sortie (49) raccordé auxdits détecteurs d'impédance (22, 24) pour élaborer ledit signal de sortie en fonction au moins d'une séquence d'états différents desdits premier et second signaux indicateurs, caractérisé en ce que les premier et second domaines (A, B) ont chacun la forme d'une bande, et en ce que le circuit de sortie (49) est sensible aux séquences d'au moins trois états différents de la paire de signaux constituée par les premier et second signaux indicateurs (Ā . B̄ Ā . B A . B ; Ā . B̄ A . B̄ A . B ; Ā . B A . B A . B̄ ; A . B̄ A . B Ā . B ; ...) de façon à délivrer ledit signal de sortie (LS) dans un premier ou un second état en fonction seulement de ce qu'est, ou non, détectée une séquence d'états différents de la paire de signaux indicateurs, dans laquelle ces états passent d'un premier état de la paire de signaux indicateurs où ces signaux ont une polarité différente (Ā . B ou A . B̄) par un deuxième état où leur polarité est la même (A . B) à un troisième état où la polarité des signaux est inverse (A . B̄ ou Ā . B) à celle du premier état (Ā . B ou A . B̄).

**Claim**

A protective device to be installed at one end of an alternating current electric power distribution line (12) connected between generators (14, 16) normally synchronized, for providing at least one output signal whose state varies whenever synchronism breakdowns between generators or power fluctuations occur, wherein this device comprises at least a first (22) and a second (24) impedance sensors generating respective first (A) and second (B) indicative signals, the state of the first indicative signal (A) being different according to whether the apparent line impedance lies within or outside a first impedance range, the state of the second indicative signal being different according to whether the apparent line impedance lies within or outside a second impedance range, and the first and second ranges sharing an overlapping zone (Zone 3) different from both ranges, which has a band-like shape along a straight line and which is crossed-through by the line impedance in case of a synchronism breakdown, wherein this device moreover comprises an output circuit (49) connected to said impedance sensors (22, 24) for generating said output signal as a function of at least one sequence of different states of said first and second indicative signals, characterized in that the first and second ranges (A, B) each have a band-like shape, and in that the output circuit (49) is responsive to sequences of at least three different states of the pair of signals formed by the first and second indicative signals (Ā . B̄ Ā . B A . B ; Ā . B̄ A . B̄ A . B ; Ā . B A . B Ā . B̄ ; A . B A . B Ā . B ; ...) in order to generate said output signal (LS) at a first or second state only according to whether or not a sequence of different states of the pair of indicative signals is detected wherein these states change from a first state of the pair of indicative signals where these signals have a different polarity (Ā . B or A . B̄), through a second state where they have the same polarity (A . B), to a third state where the signals have an opposite polarity (A . B̄ or Ā . B) to that of the first state (Ā . B or A . B̄).

**Anspruch**

Schutzvorrichtung zum Einbau an einem Ende einer elektrischen Wechselstrom-Energietransportleitung (12), die zwischen normalerweise synchronisierte Generatoren (14, 16) geschaltet ist, zur Abgabe wenigstens eines Ausgangssignals, dessen Zustand unterschiedlich ist, je nachdem, ob Synchronitätsunterbrechungen zwischen den Generatoren oder Leistungsschwankungen auftreten, wobei diese Vorrichtung wenigstens erste (22) und zweite (24) Impedanzdetektoren umfaßt, die erste (A) bzw. zweite (B) Anzeigesignale abgeben, wobei der Zustand des ersten Anzeigesignals (A) unterschiedlich ist, je nachdem, ob die in Erscheinung tretende Impedanz der Leitung innerhalb oder außerhalb eines ersten Impedanzbereiches liegt, während der Zustand des zweiten Signals unterschiedlich ist, je nachdem, ob die in Erscheinung tretende Impedanz der Leitung innerhalb oder außerhalb eines zweiten Impedanzbereiches liegt, und wobei der erste und der zweite Bereich eine Überdeckungszone (Zone 3) gemeinsam haben, die von jedem der beiden Bereiche verschieden ist, die die Form eines Streifens entlang der Erstreckungsrichtung einer Geraden aufweist und die von der Leitungsimpedanz im Falle einer Synchronitätsunterbrechung durchquert wird, wobei diese Vorrichtung ferner eine Ausgangsschaltung (49) umfaßt, die an die Impedanzdetektoren (22, 24) angeschlossen ist, um das genannte Ausgangssignal in Abhängigkeit von wenigstens einer Folge verschiedener Zustände der ersten und zweiten Anzeigesignale zu erzeugen, dadurch gekennzeichnet daß der erste und der zweite Bereich (A, B) jeweils die Form eines Streifens aufweisen und daß die Ausgangsschaltung (49) anspricht auf die Folgen von wenigstens drei verschiedenen Zuständen des Signalpaares, das gebildet ist aus den ersten und den zweiten Anzeigesignalen (Ā . B̄ Ā . B A . B ; Ā . B̄ A . B ; Ā . B A . B A . B̄ ; A . B̄ A . B Ā . B ; ...), so daß das genannte Ausgangssignal (S) in einem ersten oder einem zweiten Zustand ausgegeben wird, in Abhängigkeit allein davon, ob eine Folge verschiedener Zustände des Anzeigesignalpaares erfaßt wird oder nicht, in welcher diese Zustände von einem ersten Zustand des Anzeigesignalpaares ausgehend, in welchem diese Signale unterschiedliche Polarität aufweisen (Ā . B oder A . B̄), über einen zweiten Zustand, in welchem ihre Polarität dieselbe ist (A . B), in einen dritten Zustand gelangen, in welchem die Polarität der Signale entgegengesetzt (A . B̄ oder Ā . B) derjenigen im ersten Zustand (Ā . B oder A . B̄) ist.

# Fig. 1

# Fig. 2

# Fig. 3